# EUROPÄISCHE PATENTSCHRIFT

(11) **EP 3 421 960 B1**
(45) Veröffentlichungstag und Bekanntmachung des Hinweises auf die Patenterteilung: **07.10.2020**
(21) Anmeldenummer: 18170015.4
(22) Anmeldetag: 30.04.2018
(51) Int. Cl.: G01L 7/16, G01L 19/10, F24T 10/15

(54) **DRUCKANZEIGER**
PRESSURE INDICATOR
INDICATEUR DE PRESSION

(30) Priorität: 26.06.2017 AT 2672017
(43) Veröffentlichungstag der Anmeldung: 02.01.2019
(73) Patentinhaber: Jansen AG, 9463 Oberriet (CH)
(72) Erfinder: Alge, Dietmar, 6890 Lustenau (AT)
(74) Vertreter: Fechner, Thomas

(56) Entgegenhaltungen:
- EP-A1- 1 219 942
- EP-A1- 2 720 022
- WO-A1-2008/131732
- FR-A- 1 238 863
- JP-A- 2003 302 107
- US-A- 3 691 981
- US-A- 4 777 828
- ERNST ROHNER: "ANPASSEN DER DRUCKPRÜFUNG NACH DIN V 4279-7 FÜR ERDWÄRMESONDEN AUS POLYETHYLEN", ENERGIEFORSCHUNGSPROGRAMM UMGEBUNGSWÄRME, WÄRME-KRAFT-KOPPLUNG, KÄLTE, Dezember 2005 (2005-12), Seiten 1-48, XP002786060, ZÜRICH

## Beschreibung

Die vorliegende Erfindung betrifft einen Druckanzeiger für eine Druckleitung einer geothermischen Anlage, insbesondere ein Erdwärmerohr, mit einem Anzeigeelement zur optischen Anzeige des Drucks in der Druckleitung und zumindest einem Verbindungselement zur druckdichten Verbindung mit der Druckleitung, wobei das Anzeigeelement verschiebbar gelagert ist, und das Anzeigeelement mit Druck beaufschlagbar und gegen den Federdruck einer Feder des Druckanzeigers verschiebbar ist.

Geothermische Anlagen werden beispielsweise zum Beheizen oder Kühlen von Gebäuden eingesetzt. Die Druckleitung einer geothermischen Anlagen wird im Betrieb von einem Fluid, insbesondere einem flüssigen Wärmeträgermedium, durchströmt. Bei der Anwendung der geothermischen Anlage zum Beheizen eines Gebäudes wird die thermische Energie bzw. Wärme des Untergrunds durch die Wandungen der Druckleitung hindurch vom Fluid aufgenommen und zum Verbraucher, z.B. einer Wärmepumpe eines Heizkreises, transportiert. Bei der Anwendung der geothermischen Anlage zum Kühlen von Gebäuden, wird Wärme vom Fluid durch die Wandungen der Druckleitung hindurch an den Untergrund abgegeben.

Die Druckleitung der geothermischen Anlage kann in unterschiedlicher Art und Weise im Untergrund angeordnet sein. Bei einer geothermischen Anlage mit einer sogenannten Erdwärmesonde erfolgt der Einbau der Druckleitung in der Regel in einem im Wesentlichen vertikalen Bohrloch des Untergrunds. Nach dem Einbringen der Druckleitung in das Bohrloch wird in der Regel eine Druckprüfung durchgeführt, um nachzuweisen, dass die Druckleitung druckdicht ist und keine Leckage von in der Druckleitung befindlichem Fluid aus der Druckleitung heraus auftritt. Diese Druckprüfung erfolgt zweckmäßigerweise vor dem Verfüllen des Bohrlochs, um etwaige Undichtigkeiten mit wenig Aufwand beheben zu können. Alternativ kann die Druckprüfung nach dem Verfüllen des Bohrlochs erfolgen.

Ein Beispiel für ein Verfahren zur Druckprüfung einer Druckleitung ist in der DIN EN 805:2000 beschrieben. Dabei wird die Druckleitung mit Fluid, in der Regel bereits mit dem für den Betrieb der geothermischen Anlage benötigten Wärmeträgermedium oder Wasser, befüllt und ein Druckanzeiger, z.B. ein analoges Manometer, an die Druckleitung angeschlossen. Im Weiteren wird die Druckleitung mit einem Prüfdruck beaufschlagt. Durch Beobachten des Manometers über einen genormten Prüfzeitraum kann festgestellt werden, ob ausgehend vom aufgebrachten Prüfdruck ein unzulässiger Druckverlust auftritt. Da Druckleitungen, insbesondere Druckleitungen aus Kunststoff, bei einer Beaufschlagung des Fluids mit einem Druck, einer Relaxation, d.h. einer vorwiegend bleibenden Verformung, unterworfen sein können, werden diese vor der eigentlichen Druckprüfung häufig mit einem definierten Überdruck beaufschlagt, welcher über dem letztendlich aufgebrachten Prüfdruck liegt. Dadurch kann der Effekt eines Druckabfalls infolge der Relaxation des Druckrohrs, welcher die Druckmessung überlagern würde, bei der Überprüfung der Dichtheit des Druckrohrs vermindert werden. Im Dokument Ernst Rohner: "Anpassen der Druckprüfung nach DIN V 4279-7 für Erdwärmesonden aus Polyethylen", Energieforschungsprogramm Umgebungswärme, Wärme-Kraft-Kopplung, Kälte, Dezember 2005 (2005-12), Seiten 1-48, Zürich, ist die Vorgehensweise bei einer gängigen Druckprüfung mittels Manometern und die Anfertigung von Protokollen erläutert.

Als Druckanzeiger werden auch elektronische Druckanzeiger zur Durchführung der Druckprüfung genutzt, welche z.B. die Aufzeichnung und Ausgabe einer Drucklinie, d.h. ein Druck-Zeit Diagramm, über einen Prüfzeitraum ermöglichen.

Die Druckprüfung repräsentiert dabei immer den Zustand des Systems während des Prüfzeitraums. Nach der Druckprüfung wird beim Stand der Technik der Druckanzeiger von der Druckleitung abgenommen und die Druckleitung, beispielsweise mit einem Stopfen, verschlossen.

Im Dokument FR 1.238.863 A ist ein Druckanzeiger der eingangs genannten Art gezeigt. Der Druckanzeiger weist einen transparenten Kopf mit einer Bohrung auf, in welcher das Anzeigeelement verschiebbar geführt ist. Am transparenten Kopf können Linien angebracht sein, die ein Ablesen des aktuellen Betriebsdrucks ermöglichen.

Beim Verfüllen des Bohrlochs oder bei anderen Bautätigkeiten, sowie Allgemein beim Auftreten von Setzungen im Untergrund, kann es zu Beschädigungen an der Druckleitung kommen. Schäden an der Druckleitung können beispielsweise durch eine unsachgemäße Verfüllung des Bohrlochs mit ungeeignetem Verfüllmaterial oder die Einwirkung von Baugeräten entstehen. Bleibt eine Beschädigung der Druckleitung bis zur Inbetriebnahme der geothermischen Anlage unbemerkt, ist in der Regel eine aufwendige Schadenssuche nötig. Spät erkannte Schäden an der Druckleitung können kostspielige Zeitverzögerungen und aufwändige Sanierungsmaßnahmen nach sich ziehen. Häufig erfolgt der Einbau der Druckleitung ins Erdreich durch ein Bohrunternehmen, während die spätere Inbetriebnahme der geothermischen Anlage beispielsweise durch einen Installationsbetrieb vorgenommen wird. Aus Haftungsgründen ist es dabei entscheidend, zu welchem Zeitpunkt ein etwaiger Schaden an der Druckleitung aufgetreten ist.

Insbesondere elektronische Prüfgeräte, aber auch analoge Manometer, sind relativ empfindlich und teuer und stehen in der Regel nicht über einen längeren Zeitraum zur Auswertung der Dichtheit einer Druckleitung einer geothermischen Anlage zur Verfügung. Durch Bedienungsfehler, insbesondere an elektronischen Prüfgeräten, kann es auch vorkommen, dass die Druckprüfung wiederholt werden muss. Die Interpretation der aufgezeichneten Drucklinie erfordert auch entsprechendes Fachwissen des Bedieners.

Aufgabe der Erfindung ist es, die Überwachung der Dichtheit von Druckleitungen für geothermische Anlagen zu vereinfachen.

Erfindungsgemäß gelingt dies durch einen Druckanzeiger mit den Merkmalen des Patentanspruchs 1.

Beim Druckanzeiger gemäß der Erfindung ist vorgesehen, dass der Druckanzeiger ein Benutzungs-Losbrechelement zum Nachweis der Erstbenutzung des Druckanzeigers aufweist und/oder dass der Druckanzeiger ein Überdruck-Losbrechelement zum Nachweis des Überschreitens eines maximal zulässigen Überdrucks aufweist.

Der Druckanzeiger ist aufgrund der verschiebbaren Lagerung des Anzeigeelements einfach und robust aufgebaut. Günstigerweise verbleibt der Druckanzeiger bis zur Inbetriebnahme der geothermischen Anlage an der Druckleitung. Dadurch kann, beispielsweise nach der Einbringung der Druckleitung in den Untergrund durch ein Bohrunternehmen, eine ordnungsgemäße Übergabe des Gewerkes an einen nachfolgenden Handwerksbetrieb, z.B. einen Installateur, erfolgen, da der Zustand der Druckleitung jederzeit durch eine einfache optische Überprüfung des Druckanzeigers kontrolliert werden kann.

Bei der Druckleitung handelt es sich günstigerweise um ein mit einem Fluid befüllbares Erdwärmerohr einer geothermischen Anlage. Das Erdwärmerohr könnte allgemein auch als Wärmetauscherrohr bezeichnet werden, wobei das Wärmetauscherrohr zum Transfer von Wärme aus dem Untergrund oder in den Untergrund dient. Die geothermische Anlage könnte eine Erdwärmesonde aufweisen, bei welcher das Erdwärmerohr in ein, zumindest im Wesentlichen vertikal ausgerichtetes, Bohrloch in den Untergrund eingebaut ist. Ein derart angeordnetes Erdwärmerohr könnte auch als Erdwärmesondenrohr bezeichnet werden. Andererseits könnte die geothermische Anlage auch einen Flächenkollektor aufweisen, wobei das Erdwärmerohr den Flächenkollektor bildet. Zur Ausbildung eines Flächenkollektors wird das Erdwärmerohr meist mäanderförmig, beispielsweise ähnlich einer Fußbodenheizung, im Untergrund verlegt. Hierbei erfolgt der Einbau des Flächenkollektors beispielsweise im Abstand von 1 bis 3 Metern unterhalb der Oberfläche des Untergrunds. Zumindest der überwiegende Teil des Flächenkollektors könnte in einer im Wesentlichen horizontalen Ebene liegen. Im Weiteren könnte das Erdwärmerohr auch als Druckleitung eines Spiralkollektors oder eines Erdwärmekorbs oder eines Energiepfahls eingesetzt sein.

Die Feder des Druckanzeigers kann eine Schraubenfeder sein. Auch andere Ausführungsformen von Federn sind denkbar, z.B. kann die Feder eine Tellerfeder oder eine Spiralfeder sein. Es kann vorgesehen sein, dass die Feder des Druckanzeigers direkt mit dem Anzeigeelement zusammenwirkt.

Der Druckanzeiger weist in einer bevorzugten Ausführungsform eine Skala mit zumindest zwei voneinander abgegrenzten Anzeigebereichen auf. Durch die Abgrenzung der Anzeigebereiche kann auf einfache Art und Weise eine Bewertung des in der Druckleitung herrschenden Drucks durchgeführt werden. Ein jeweiliger Anzeigebereich repräsentiert dabei einen diesem Anzeigebereich zugeordneten Druckbereich, welcher jeweils von einem Minimalwert des Drucks und einem Maximalwert des Drucks begrenzt ist. Die Anzeigebereiche müssen in sich nicht weiter aufgegliedert sein. Sie können z.B. durch Farben, Muster und/oder dergleichen in sich homogen gekennzeichnet, aber voneinander unterscheidbar, sein.

So weisen günstigerweise zumindest zwei benachbarte Anzeigebereiche, vorzugsweise jeder der Anzeigebereiche, eine unterschiedliche Farbe und/oder Helligkeit und/oder Oberflächenstruktur auf. Bei der Verwendung optisch unterschiedlich ausgebildeter Anzeigebereiche ist eine einfache Erfassung und Bewertung des vom Druckanzeiger angezeigten Druckes möglich.

Besonders bevorzugt weist die Skala einen ersten Anzeigebereich zur Anzeige eines Druckbereichs der unterhalb eines Mindestdrucks liegt, und einen zweiten Anzeigebereich zur Anzeige eines Druckbereichs welcher zwischen dem Mindestdruck und einem maximal zulässigen Prüfdruck liegt, und einen dritten Anzeigebereich zur Anzeige eines Druckbereichs der über dem maximal zulässigen Prüfdruck liegt, auf. Es könnten auch noch weitere Anzeigebereiche vorgesehen sein, z.B. ein vierter Anzeigebereich zur Anzeige eines unzulässigen Überdrucks. Der Mindestdruck könnte beispielsweise in einem Bereich von 3 bar bis 6 bar, vorzugsweise 3,5 bar bis 4,5 bar liegen. Der maximal zulässige Prüfdruck könnte beispielsweise in einem Bereich von 10 bar bis 22 bar, vorzugsweise 14 bis 18 bar, liegen. Beispielsweise könnte der Mindestdruck 4 bar und der maximal zulässige Prüfdruck 16 bar betragen. Der zweite Anzeigebereich deckt dann einen Druckbereich von mindestens 4 bar und höchstens 16 bar ab.

In einer bevorzugten Ausführungsform ist vorgesehen, dass die Skala am Anzeigeelement angeordnet ist. Die Skala kann dann mit dem verschiebbar gelagerten Anzeigeelement mitbewegt werden. Die Skala könnte beispielsweise an einem stiftförmigen Fortsatz des Anzeigeelements angeordnet sein. In einer anderen Ausführungsform könnte vorgesehen sein, dass die Skala feststehend am Druckanzeiger angeordnet ist und das Anzeigeelement relativ zur Skala verschiebbar ist.

Das Anzeigeelement könnte direkt mit Druck beaufschlagbar sein. Beispielsweise kann vorgesehen sein, dass das Anzeigeelement einen Kolben aufweist oder ein Kolben ist, wobei der Kolben mit dem Druck beaufschlagbar ist. Das Anzeigeelement kann in einem Gehäuse, vorzugsweise in einem Zylinder, des Druckanzeigers verschiebbar gelagert sein. Mit einem direkt mit Druck beaufschlagbaren Anzeigeelement kann ein einfacher Aufbau des Druckanzeigers realisiert werden.

Andererseits ist es auch denkbar, dass der Druck in der Druckleitung indirekt auf das Anzeigeelement einwirkt, z.B. auf einen Kolben des Druckanzeigers, welcher über einen Hebel mit dem Anzeigeelement mechanisch gekoppelt ist.

In einer erfindungsgemäßen Ausführungsform ist vorgesehen, dass der Druckanzeiger ein Benutzungs-Losbrechelement zum Nachweis der Erstbenutzung des Druckanzeigers aufweist. Bei der ersten Beaufschlagung des Anzeigeelements mit einem Druck in der Druckleitung, welcher höher als der von der Feder ausgeübte Gegendruck ist, erfolgt eine Verschiebung des Anzeigeelements. Das Benutzungs-Losbrechelement wird bei einer Verschiebung des Anzeigeelements abgetrennt oder irreversibel zerstört. Beispielsweise könnte das Benutzungs-Losbrechelement vom Anzeigeelement, vorzugsweise von einem Stempel des Anzeigeelements, abbrechbar sein. Es ist auch denkbar, dass das Benutzungs-Losbrechelement als Membran ausgebildet ist, welche bei der ersten Benutzung des Druckanzeigers, d.h. bei einer erstmaligen Beaufschlagung mit dem Druck in der Druckleitung, vom Anzeigeelement durchstoßen wird. Durch Kontrolle der Unversehrtheit des Benutzungs-Losbrechelements vor der Erstbenutzung kann festgestellt werden, dass der Druckanzeiger noch nicht benutzt wurde. In anderen Worten deutet das Fehlen oder die Zerstörung des Benutzungs-Losbrechelements auf eine bereits erfolgte Beaufschlagung des Druckanzeigers hin.

In einer weiteren Ausführungsform gemäß der Erfindung ist vorgesehen, dass der Druckanzeiger alternativ oder zusätzlich zum Benutzungs-Losbrechelement ein Überdruck-Losbrechelement zum Nachweis des Überschreitens eines maximal zulässigen Überdrucks aufweist. Bei einer Beaufschlagung des Anzeigeelements mit einem Druck, welcher höher ist als der maximal zulässige Überdruck, wird das Überdruck-Losbrechelement irreversibel zerstört oder abgetrennt. Das Fehlen oder die Zerstörung des Überdruck-Losbrechelements deutet auf eine, zumindest kurzzeitig, unzulässig hohe Druckbelastung der Druckleitung hin. Das Überdruck-Losbrechelement kann vom Anzeigeelement abbrechbar sein.

Es kann vorgesehen sein, dass das Benutzungs-Losbrechelement und/oder das Überdruck-Losbrechelement mit einem Gehäuse des Druckanzeigers, vorzugsweise materialeinstückig, verbunden ist oder sind. Das Benutzungs-Losbrechelement und/oder das Überdruck-Losbrechelement könnte beispielsweise auch mittels Klebstoff mit dem Gehäuse des Druckanzeigers verbunden sein.

Besonders bevorzugt kann das Benutzungs-Losbrechelement und/oder das Überdruck-Losbrechelement nicht zerstörungsfrei, also in anderen Worten nur durch eine dauerhaft nachweisbare Zerstörung, vom Gehäuse des Druckanzeigers entfernt werden. Besonders vorteilhaft ist es, wenn das Benutzungs-Losbrechelement und/oder das Überdruck-Losbrechelement mit dem Gehäuse, vorzugsweise materialeinstückig, über zumindest eine Sollbruchstelle verbunden ist oder sind.

Die Erfindung betrifft auch eine Anordnung mit einer Druckleitung einer geothermischen Anlage, insbesondere einem Erdwärmerohr, und einem erfindungsgemäßen Druckanzeiger zur Erfassung des Drucks in der Druckleitung. Der Druckanzeiger ist dabei über das Verbindungselement druckdicht mit der Druckleitung verbunden. Eine derartige Anordnung könnte bereits im vormontierten Zustand auf die Baustelle geliefert werden.

In einer bevorzugten Ausführungsform weist die Anordnung eine Plombierung zum Nachweis einer unzulässigen Entfernung des Druckanzeigers von der Druckleitung auf. Die Plombierung könnte auch als Verplombung oder als Siegel oder als Versiegelung oder allgemein als Manipulationsnachweiselement bezeichnet werden.

Die Plombierung ist günstigerweise nur mittels Zerstörung der Plombierung von der Anordnung lösbar. Eine derartige Anordnung, bei der die Plombierung an der Anordnung angebracht ist, könnte im vormontierten Zustand auf die Baustelle geliefert werden. Auch ein Anbringen der Plombierung auf der Baustelle wäre denkbar und möglich.

Beispielsweise könnte die Plombierung einen Plombierdraht und eine plastisch verformbare Plombe umfassen. Derartige Plombierungen sind hinlänglich bekannt.

Günstigerweise weist der Druckanzeiger und/oder die Druckleitung eine Durchgangsbohrung zum Hindurchführen des Plombierdrahts auf. Alternativ könnte der Druckanzeiger und/oder die Druckleitung eine umlaufende Nut aufweisen, in welcher der Plombierdraht um die Druckleitung geführt ist. Es wäre aber auch denkbar, dass der Plombierdraht auf dem Druckanzeiger und/oder der Druckleitung mittels eines, nur mittels Zerstörung lösbaren, Klebstoffs oder eines, nur mittels Zerstörung lösbaren, Siegelaufklebers befestigbar oder befestigt ist.

Der Plombierdraht ist in einem verplombten Zustand der Plombierung in der Plombe formschlüssig verankert, wobei der Plombierdraht formschlüssig, insbesondere durch eine plastische Verformung der Plombe mittels einer Plombierzange, in der Plombe gehalten ist. Hierzu könnte die Plombe zumindest eine Durchgangsbohrung zum Hindurchführen des Plombierdrahts aufweisen, welche den Plombierdraht im verplombten Zustand, insbesondere aufgrund der plastischen Verformung der Plombe, formschlüssig umschließt.

Eine Beschädigung oder Zerstörung der Plombierung deutet auf eine unerlaubte Manipulation an der Anordnung, beispielsweise auf eine, zumindest kurzzeitige, Entfernung des Druckanzeigers, hin.

Auch andere Ausführungsformen einer Plombierung sind denkbar und möglich. Z.B. könnte die Plombierung ein Klebeetikett, insbesondere ein Klebesiegel sein, welches im verplombten Zustand auf den Druckanzeiger und die Druckleitung aufgeklebt ist.

Im Weiteren betrifft die Erfindung ein Verfahren zur Druckprüfung einer Druckleitung einer geothermischen Anlage, insbesondere eines Erdwärmesondenrohrs. Der erfindungsgemäße Druckanzeiger ist oder wird mit der Druckleitung verbunden, wobei die Druckleitung mit einem Druck, welcher einem vorab definierten Prüfdruck entspricht, beaufschlagt wird. Der Druckanzeiger ist über zumindest 1,5 Stunden, vorzugsweise zumindest 12 Stunden, mit der unter Druck stehenden Druckleitung verbunden. Besonders bevorzugt ist der Druckanzeiger über zumindest 24 Stunden, z.B. mehr als 72 Stunden, mit der unter Druck stehenden Druckleitung verbunden. Mit dem erfindungsgemäßen Druckanzeiger kann so auf einfache Art und Weise der Druckverlauf über einen langen Zeitraum nachvollzogen werden. Besonders bevorzugt ist der Druckanzeiger ab der Erstbenutzung des Druckanzeigers bis zum Beginn der Inbetriebnahme der geothermischen Anlage mit der Druckleitung verbunden.

Die Druckprüfung könnte den Schritt umfassen, dass die Druckleitung zuerst mit reinem Wasser frei von Luft gespült wird. Alternativ könnte auch bereits das Fluid für den späteren Betrieb der geothermischen Anlage, insbesondere die Wärmeträgerflüssigkeit, zum Spülen der Druckleitung verwendet werden. In einem weiteren Schritt könnte der Druckanzeiger über das Verbindungselement mit der Druckleitung verbunden werden. Der Druck in der Druckleitung könnte im Weiteren auf einen Prüfdruck, welcher beispielsweise dem maximal zulässigen Prüfdruck entspricht, beispielsweise auf 16 bar, eingestellt werden. Die Einstellung könnte zum Beispiel mit einer Druckpumpe erfolgen. Danach wird die Druckleitung druckdicht verschlossen. Nun kann der aktuelle Druck zu jedem Zeitpunkt vom Druckanzeiger abgelesen werden. Insbesondere ist kontrollierbar, ob vor der Inbetriebnahmephase der geothermischen Anlage ein unzulässiger Druckabfall erfolgt ist. Verfügte der Druckanzeiger im Auslieferungszustand über ein Überdruck-Losbrechelement, kann mit einem Blick auf den Druckanzeiger festgestellt werden, ob im vorangegangenen Prüfzeitraum eine Überlastung der Druckleitung erfolgt ist.

Weitere Vorteile und Einzelheiten der Erfindung werden im Folgenden anhand des in den Figuren gezeigten Ausführungsbeispiels eines Druckanzeigers und einer Anordnung mit einer Druckleitung einer geothermischen Anlage und einem Druckanzeiger gemäß der Erfindung erläutert. In diesen Figuren zeigen:
Fig. 1 eine Schnittansicht eines erfindungsgemäßen Druckanzeigers vor der ersten Benutzung;
Fig. 2 eine Ansicht von oben auf den Druckanzeiger gemäß Fig. 1;
Fig. 3 den Druckanzeiger gemäß Fig. 1 in einem Zustand während einer Druckprüfung;
Fig. 4 eine Ansicht von oben auf den Druckanzeiger gemäß Fig. 3;
Fig. 5 den Druckanzeiger gemäß Fig. 1 in einem Zustand, in welchem ein definierte Mindestdruck unterschritten ist;
Fig. 6 den Druckanzeiger gemäß Fig. 1 welcher einen Druck anzeigt, der über einem maximal zulässigen Überdruck liegt;
Fig. 7 eine Ansicht von oben auf den Druckanzeiger gemäß Fig. 6;
Fig. 8 eine Schnittdarstellung eines Befüllstutzens mit einem Rückschlagventil;
Fig. 9 eine Schnittdarstellung eines Adapters zum Befestigen des Druckanzeigers an einer Druckleitung;
Fig. 10 eine schematische Darstellung von zwei Anordnungen mit jeweils einer Druckleitung und einem Druckanzeiger zur Erfassung des Drucks in der jeweiligen Druckleitung;
Fig. 11 Beispiele für unterschiedliche Druckverläufe während einer Druckprüfung, und
Fig. 12 eine alternative Ausführungsvariante der in Fig. 10 dargestellten Anordnungen.

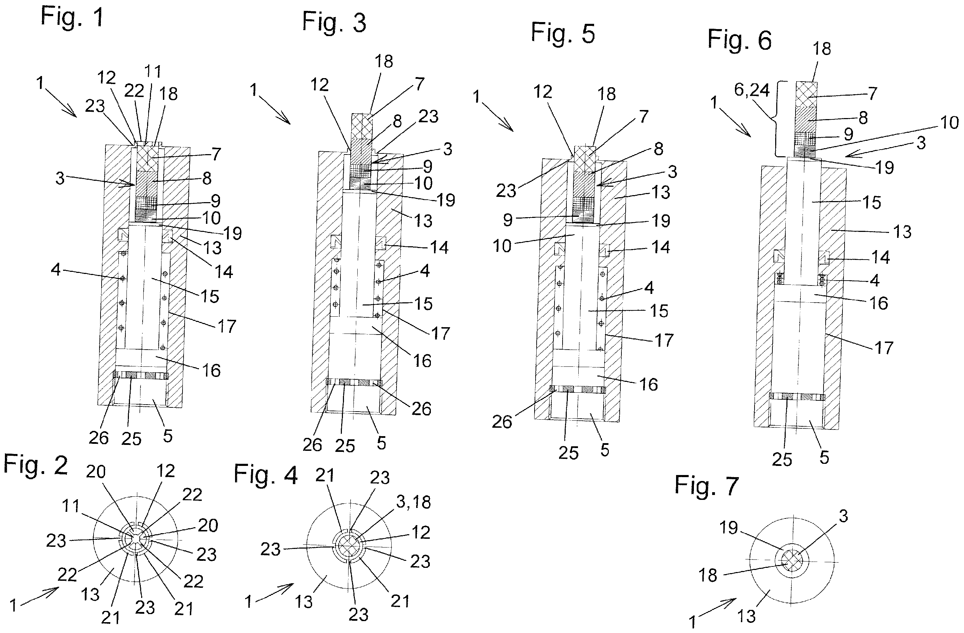

Der in den Figuren 1 bis 7 dargestellte Druckanzeiger 1 weist im Ausführungsbeispiel ein Gehäuse 13 mit einem einen Hohlraum ausbildenden Zylinder 17 auf, vgl. Fig. 1. Das Gehäuse 13 ist im Ausführungsbeispiel aus Kunststoff gefertigt. Auch andere Materialien kommen grundsätzlich in Frage, z.B. Metall.

Das Gehäuse 13 weist im Ausführungsbeispiel ein Verbindungselement 5 auf, welches hier beispielhaft als Innengewinde ausgebildet ist. Das Verbindungselement 5 dient der druckdichten Verbindung des Druckanzeigers 1 mit einer Druckleitung 2 einer geothermischen Anlage. Auch andere Ausführungsformen von Verbindungselementen 5 sind grundsätzlich denkbar und möglich. Beispielsweise könnte das Verbindungselement 5 ein Außengewinde sein. Anstatt eines als Innen-oder Außengewinde ausgebildeten Verbindungselements 5 könnte das Verbindungselement auch als Flansch ausgebildet sein, welcher mit zumindest einer Schraube an einem Gegenflansch der Druckleitung 2 an der Druckleitung 2 befestigbar ist. Günstigerweise ist das Verbindungselement 5, zur Entfernung des Druckanzeigers 1 von der Druckleitung 2, zerstörungsfrei lösbar.

Im Weiteren umfasst der Druckanzeiger 1 ein Anzeigeelement 3 zur optischen Anzeige des Drucks in der Druckleitung 2. Das Anzeigeelement 3 ist mit dem in der Druckleitung 2 herrschenden Druck beaufschlagbar. Im Ausführungsbeispiel weist das Anzeigeelement 3 hierzu einen Kolben 16 auf, welcher im Zylinder 17 des Gehäuses 13 verschiebbar gelagert ist. Der Kolben 16 ist zumindest während der Druckprüfung mit einem Fluid, welches in die Druckleitung 2 gefüllt ist, direkt in Kontakt. Der Kolben 16 des Anzeigeelements 3 könnte - abweichend von der gezeigten Ausführungsform - eine Dichtung tragen.

Weiters weist das Anzeigeelement 3 im Ausführungsbeispiel eine mit dem Kolben 16 verbundene Kolbenstange 15 auf, welche mittels einer Dichtung 14 gegenüber dem Gehäuse 13 abgedichtet ist. Die Dichtung 14 ist im Ausführungsbeispiel als Lippendichtung ausgebildet. In anderen Ausführungsvarianten könnte die Dichtung 14 beispielsweise ein O-Ring sein. Die Kolbenstange 15 ist mit dem Kolben 16 relativ zum Gehäuse 13, günstigerweise in einander entgegengesetzten Richtungen parallel zu einer Längsmittenachse des Anzeigeelements 3, verschiebbar.

Der Druckanzeiger 1 weist im Weiteren eine als Schraubenfeder ausgebildete Feder 4 auf. Auch andere Ausführungsformen von Federn 4 sind denkbar, wie dies bereits eingangs erläutert wurde. Die Feder 4 ist zwischen dem Gehäuse 3 und dem Kolben 16 angeordnet. Das Anzeigeelement 3 ist gegen den Federdruck der Feder 4 des Druckanzeigers 1 verschiebbar, vgl. Fig. 3, 5 und 6. D.h. mit steigendem Druck des Fluids in der Druckleitung 2, welches den Kolben 16 auf der der Kolbenstange 15 abgewandten Seite des Kolbens 16 beaufschlagt, wird die Feder 4 komprimiert.

Insbesondere wenn auf eine Dichtung am Kolben 16 verzichtet wird, wie dies auch im Ausführungsbeispiel gezeigt ist, kann der Zylinder 17 während des Betriebes des Druckanzeigers 1, abgesehen vom Volumen des Kolbens 16 und der Kolbenstange 15, vollständig mit Fluid gefüllt sein. D.h. das Fluid könnte den Kolben 16 umströmen. Aufgrund der unterschiedlichen Angriffsflächen des Kolbens 16 für das Fluid auf der der Kolbenstange 15 abgewandten Seite des Kolbens 16 und auf der Seite der Kolbenstange 15, wirkt eine Differenzkraft auf den Kolben 16, welche dem Federdruck der Feder 4 entgegenwirkt. Bei Erreichen eines Gleichgewichts aufgrund der von der Federkennlinie vorgegebenen Federkraft, d.h. dem Federdruck, und der auf den Kolben 16 einwirkenden Differenzkraft, nimmt der Kolben 16 des Anzeigeelements 3 eine den auf ihn wirkenden Druck des Fluides kennzeichnende Gleichgewichtsstellung ein. Durch die Auswahl einer Feder 4 mit einer vorbestimmten Federkennlinie ist es möglich, den Verschiebeweg des Anzeigeelements 3 in Abhängigkeit vom auf den Kolben 16 des Anzeigeelements 3 einwirkenden Druck des Fluids zu konfigurieren.

An der Kolbenstange 15 ist im Ausführungsbeispiel ein stiftförmiger Fortsatz ausgebildet, der im Folgenden als Stift 24 bezeichnet wird. Der Stift 24 ist mit dem Kolben 16 relativ zum Gehäuse 3 mitverschiebbar.

Der Kolben 16 und die Kolbenstange 15 und der Stift 24 sind im Ausführungsbeispiel materialeinstückig miteinander verbunden. Beispielsweise könnten der Kolben 16 und die Kolbenstange 15 und der Stift 24 aus Kunststoff oder Metall gefertigt sein. Der Stift 24 könnte auch als Zapfen bezeichnet werden.

Im Ausführungsbeispiel weist der Druckanzeiger 1 einen Anschlag 25 auf, der den Verschiebeweg des Kolbens 16 in axialer Richtung in einem drucklosen Zustand des Druckanzeiger 1 begrenzt. Der Anschlag 25 weist im Ausführungsbeispiel ein Außengewinde aus, welches in das als Innengewinde ausgeführte Verbindungselement 5 eingreift. Der Anschlag 25 könnte auch als Scheibe bezeichnet werden. Der Anschlag 25 weist zumindest eine Durchtrittsöffnung 26 auf, welche den Durchtritt des Fluids aus der Druckleitung 2 zum Kolben 16 ermöglicht, vgl. Fig. 1.

Vorzugsweise steht das Anzeigeelement 3, ausgehend von einem drucklosen Zustand, mit zunehmendem Verschiebeweg des Anzeigeelements 3, d.h. bei einem zunehmenden auf das Anzeigeelement 3 einwirkenden Druck, immer weiter aus dem Gehäuse 13 des Druckanzeigers 1 heraus. Dadurch kann der Benutzer auf einfache und schnelle Weise auf die Höhe des in der Druckleitung 2 herrschenden Druck schließen. Im gezeigten Ausführungsbeispiel steht der Stift 24 mit zunehmendem Verschiebeweg des Anzeigeelements 3 bei einem zunehmenden, auf den Kolben 16 des Anzeigeelements 3 einwirkenden, Druck des Fluids, unter Komprimierung der Feder 4, immer weiter vom Gehäuse 13 hervor, vgl. Fig. 3 und 6.

Der Druckanzeiger 1 weist im Ausführungsbeispiel eine Skala 6 auf. Die Skala 6 ist im Ausführungsbeispiel am Stift 24 angeordnet. Die Skala 6 könnte z.B. auf dem Stift 24 aufgedruckt sein. In einer anderen Ausführungsform könnte die Skala 6 auch auf dem Stift 24 aufgeklebt oder direkt aus dem Material des Stifts 24 herausgearbeitet sein. Die Skala 6 erleichtert die Bewertung des vom Druckanzeiger 1 angezeigten Druck des Fluids in der Druckleitung 2.

Die Skala 6 weist im Ausführungsbeispiel vier voneinander abgegrenzte Anzeigebereiche, nämlich einen ersten Anzeigebereich 7 und einen zweiten Anzeigebereich 8 und einen dritten Anzeigebereich 9 und einen vierten Anzeigebereich 10, auf. Dadurch kann eine einfache Bewertung des Drucks des Fluids durch den Benutzer erfolgen. Auch mehr oder weniger als vier voneinander abgegrenzte Anzeigebereiche sind möglich.

Zur optischen Unterscheidung von zwei benachbarten Anzeigebereichen 7 bis 10 ist im Ausführungsbeispiel vorgesehen, dass jeder der Anzeigebereiche 7 bis 10 eine unterschiedliche Farbe aufweist. In alternativen Ausführungsformen könnte auch vorgesehen sein, dass die Anzeigebereiche 7 bis 10 eine unterschiedliche Helligkeit und/oder Oberflächenstruktur und/oder Muster und/oder dergleichen aufweisen. Der erste Anzeigebereich 7 der Skala 6 dient zur Anzeige eines Drucks der unterhalb eines Mindestdrucks liegt. Der Mindestdruck könnte beispielsweise 4 bar betragen. Auch andere Werte für den Mindestdruck sind, wie eingangs erwähnt, möglich. An den ersten Anzeigebereich 7 schließt im Ausführungsbeispiel der zweite Anzeigebereich 8 der Skala 6 an. Der zweite Anzeigebereich 8 zeigt einen Druckbereich an, welcher zwischen dem Mindestdruck und einem maximal zulässigen Prüfdruck liegt. Benachbart zum zweiten Druckbereich 8 weist die Skala den dritten Anzeigebereich 9 auf. Der dritte Anzeigebereich 9 zeigt einen Druckbereich an, welcher zwischen dem maximal zulässigen Prüfdruck und einem maximal zulässigen Überdruck liegt. Der vierte Anzeigebereich 10, der benachbart zum dritten Anzeigebereich 9 angeordnet ist, dient zur Anzeige eines Druckbereichs der über dem maximal zulässigen Überdruck liegt.

Wie bereits erläutert, tritt der Stift 24, und damit die Skala 6, je nach Höhe des auf das Anzeigeelement 3 einwirkenden Fluiddrucks unterschiedlich weit aus dem Gehäuse 13 hervor. Ausgehend vom drucklosen Zustand wird bei einem ansteigenden Druck in der Druckleitung 2 zuerst der erste Anzeigebereich 7, und bei einem weiterem Anstieg des Drucks, zusätzlich auch der zweite Anzeigebereich 8 angezeigt. In diesem Zustand, bei dem nur der erste Anzeigebereich 7 und der zweite Anzeigebereich angezeigt sind, sind der dritte Anzeigebereich 9 und der vierte Anzeigebereich 10 im Gehäuse 13 verborgen, vgl. Fig. 3. Erst bei einem weiteren Druckanstieg ist zusätzlich der dritte Anzeigebereich 9 und bei einer weiteren Erhöhung des Drucks in der Druckleitung 2 auch der vierte Anzeigebereich 10 sichtbar, vgl. Fig. 6.

Im Ausführungsbeispiel weist der Druckanzeiger1 ein Benutzungs-Losbrechelement 11 zum Nachweis der Erstbenutzung des Druckanzeigers 1 auf. Das Benutzungs-Losbrechelement 11 ist im Ausführungsbeispiel über mehrere, jeweils als Steg 22 ausgebildete, Sollbruchstellen mit dem Gehäuse 13 materialeinstückig verbunden, vgl. Fig. 2. Bezogen auf eine Umfangsrichtung, ausgehend von der Längsmittenachse des Anzeigeelements 3, ist zwischen den jeweiligen Stegen 22 eine Ausnehmung 20 vorgesehen. Dies ist jedoch nur eine von vielen möglichen Ausführungsformen von Losbrechelementen. In einer anderen Ausführungsform könnte vorgesehen sein, dass das Benutzungs-Losbrechelement 11 als Membran ausgebildet ist, welche vom Anzeigeelement 3 bei der Erstbenutzung durchstoßen wird. Der Benutzer kann anhand des Vorhandenseins bzw. der Unversehrtheit des Benutzungs-Losbrechelements 11 vor der Inbetriebnahme des Druckanzeigers 1 feststellen, dass der Druckanzeiger 1 fabrikneu ist.

Im Ausführungsbeispiel weist der Stift 24 einen Stempel 18 auf, der bei einer Verschiebung des Stifts 24 aus dem Gehäuse 13 heraus, auf das Benutzungs-Losbrechelement 11 einwirkt. Dabei bricht der Stempel 18 das Benutzungs-Losbrechelement 11 irreversibel ab. Das Benutzungs-Losbrechelement 11 ist daher nur im unbenutzten Zustand des Druckanzeigers 1 vorhanden bzw. unversehrt. In den in den Fig. 3 und 5 dargestellten Zuständen ist das Benutzung-Losbrechelement 11 nicht mehr mit dem Gehäuse 13 verbunden. Man kann somit die Tatsache, dass der Druckanzeiger 1 bereits einmal benutzt wurde auch später im drucklosen Zustand noch erkennen.

Im Ausführungsbeispiel ist weiters vorgesehen, dass der Druckanzeiger 1 ein Überdruck-Losbrechelement 12 zum Nachweis des Überschreitens des maximal zulässigen Überdrucks aufweist. Bei einer Beaufschlagung des Anzeigeelements 3, d.h. im Ausführungsbeispiel des Kolbens 16, mit einem Druck, welcher höher ist als der maximal zulässige Überdruck, bricht das Überdruck-Losbrechelement 12 ab. Hierzu weist der Stift 24 einen zweiten Stempel 19, der auch als Stufe bezeichnet werden könnte, auf, welcher beim Überschreiten des maximal zulässigen Überdrucks auf das Überdruck-Losbrechelement 12 einwirkt. In anderen Worten wird das Überdruck-Losbrechelement 12 beim Überschreiten des maximal zulässigen Überdrucks vom Stempel 19 abgeschert bzw. abgetrennt, vgl. Fig. 6. Ist das Überdruck-Losbrechelement 12 am Druckanzeiger 1 nicht mehr vorhanden oder vom Gehäuse 13 abgetrennt, so liegt oder lag eine unzulässige Überlastung der Druckleitung 2 vor. Ein fehlendes oder beschädigtes Überdruck-Losbrechelement 12 signalisiert dem Benutzer auch dann, wenn der Druck in der Druckleitung 2 in der Zwischenzeit einen verminderten Wert oder gar keinen Druck anzeigt, dass eine zumindest einmalige Überschreitung des maximal zulässigen Überdrucks in der Druckleitung 2 stattfand.

Auch das Überdruck-Losbrechelement 12 ist im Ausführungsbeispiel materialeinstückig über zumindest eine Sollbruchstelle mit dem Gehäuse 13 verbunden. Im Ausführungsbeispiel sind die Sollbruchstellen als Stege 23 ausgebildet, welche das Überdruck-Losbrechelement 12 halten. Zwischen jeweils zwei Stegen 23 sind Ausnehmungen 21 angeordnet, vgl. Fig. 2 und Fig. 4.

Die im Ausführungsbeispiel gezeigten Ausnehmungen 20, 21 könnten auch als Perforation bezeichnet werden.

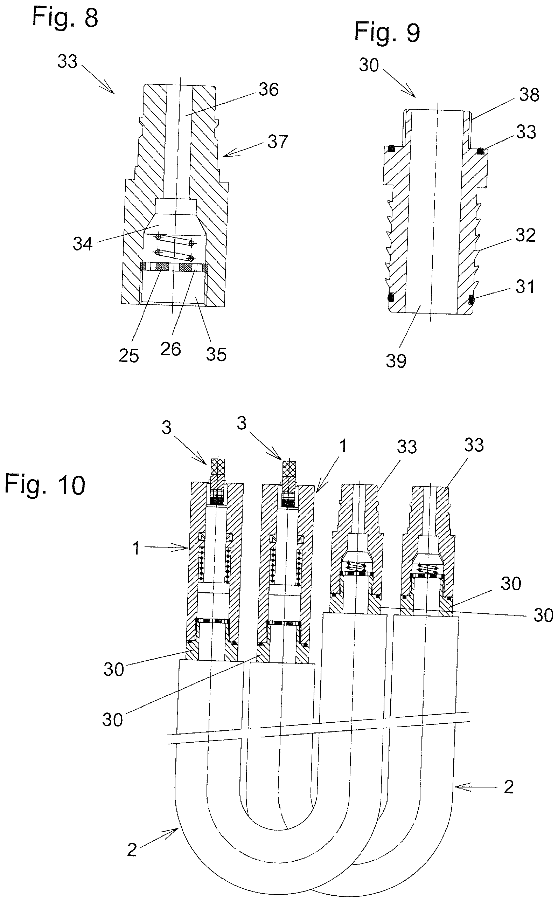

In Fig. 10 ist beispielhaft eine Anordnung mit zwei Druckleitungen 2 einer geothermischen Anlage gezeigt. Eine jeweilige Druckleitung 2 ist als sogenanntes Erdwärmerohr ausgebildet. Die Druckleitung 2 könnte auch als Erdwärmesondenrohr bezeichnet werden.

An den Enden einer jeweiligen Druckleitung 2 ist in der Anordnung nach Fig. 10 ein Adapter 30 angeordnet. Dieser ist in Fig. 9 im Detail dargestellt. Der Adapter 30 weist ein Gegenverbindungselement 38 zur Verbindung mit dem Verbindungselement 5 des Druckanzeigers 1 auf. Der Adapter 30 ist an den Innendurchmesser einer jeweiligen Druckleitung 2 angepasst und ermöglicht es durch gezielte Auswahl des Adapters 30, eine einzige Ausführungsform des Druckanzeigers 1 bei Druckleitungen 2 mit unterschiedlichen Innendurchmessern einzusetzen. Im Ausführungsbeispiel ist vorgesehen, dass der Adapter 30 Rasterhebungen 32 aufweist, welche sich beispielsweise über den gesamten Umfang des Adapters 30 erstrecken können. Die Rasterhebungen 32 dienen zur Verbindung mit der Druckleitung 2. Weiters weist der Adapter 30 Dichtungen 31, 33 auf, welche als O-Ringe ausgeführt sind und eine druckdichte Verbindung zwischen dem Druckanzeiger 1 und dem Adapter 30 bzw. der Druckleitung 2 und dem Adapter 30 ermöglichen. Zur Verbindung mit der Druckleitung 2 wird der Adapter 30 in die Druckleitung 2 eingepresst. Der Adapter 30 weist im Weiteren einen inneren Kanal 39 auf.

An dieser Stelle wird festgehalten, dass auf einen Adapter 30 auch verzichtet werden könnte und stattdessen der Druckanzeiger 1 direkt mit der Druckleitung 2 verbunden werden könnte. Der Adapter könnte in einer anderen Ausführungsvariante auch direkt am Druckanzeiger angeformt sein. Insbesondere wäre es möglich, dass der Adapter materialeinstückig mit dem Gehäuse 13 verbunden ist. Die Rasterhebungen 32 sind dann das Verbindungselement zur druckdichten Verbindung des Druckanzeigers 1 mit der Druckleitung 2.

An einen der zwei mit der Druckleitung 2 verbundenen Adapter 30 ist in der Anordnung nach Fig. 10 der Druckanzeiger 1 angeschlossen. An dem dem Druckanzeiger 1 gegenüberliegenden Ende der Druckleitung 2 ist im Ausführungsbeispiel ein Befüllstutzen 33 angeordnet. Der Aufbau des Befüllstutzens 33 kann der Fig. 8 entnommen werden. Der Befüllstutzen 33 weist ein, in der Schnittzeichnung nach Fig. 8 nur schematisch dargestelltes, Rückschlagventil 34 auf. Der Befüllstutzen 33 weist auch einen Zuführkanal 36 auf, in welchen das Fluid durch Abheben des Rückschlagventils 34 von einem nicht näher bezeichneten Ventilsitz in die Druckleitung 2 gefüllt werden kann. Der Befüllstutzen 33 weist ein Gewinde 35 zur Verbindung mit dem Gegenverbindungselement 38 des Adapters 30 auf, vgl. auch Fig. 10. Auf der dem Gewinde 35 abgewandten Seite des Befüllstutzens 33 ist ein Steckanschluss 37 zum Anschluss an eine Pumpe angeordnet. Die Verbindung der Pumpe mit dem Befüllstutzen 33 kann nach dem Befüllen der Druckleitung 2 und der Einstellung des Prüfdrucks getrennt werden, da das Rückschlagventil 34 das Ausströmen von Fluid aus der Druckleitung 2 heraus verhindert.

Im Folgenden wird ein mögliches Verfahren zum Nachweis der Dichtheit der Druckleitung 2 erläutert. In einem ersten Schritt werden die Adapter 30, sofern diese nicht bereits an der Druckleitung 2 vormontiert sind, mit der Druckleitung 2 verbunden. Der Druckanzeiger 1 wird, sofern er bereits vormontiert ist, vom Adapter 30 abgenommen. Im Weiteren wird der Befüllstutzen 33 mit dem Adapter 30 druckfest verbunden. Die Druckleitung 2 wird anschließend mit Wasser, frei von Luft, gespült. Nach dem Spülen der Druckleitung 2, welches anstatt mit Wasser auch schon mit dem später für den Betrieb vorgesehenen Fluid befüllt werden könnte, wird der Druckanzeiger 1 über das Verbindungselement 5 druckfest mit dem Adapter 30 verbunden. Der Druck in der Druckleitung 2 wird im Weiteren auf einen Prüfdruck, welcher beispielsweise dem maximal zulässigen Prüfdruck entspricht, eingestellt. Die Einstellung könnte z.B. mit einem an der Pumpe vorhandenen Manometer erfolgen. Durch Ablesen des Anzeigeelements 3 am Druckanzeiger 1 kann kontrolliert werden, dass der erste Anzeigebereich 7 und der zweite Anzeigebereich 8 der Skala 6 von außen sichtbar sind bzw. vom Gehäuse 13 des Druckanzeigers hervorstehen.

Im Verlauf der Druckprüfung kommt es in der Regel zu einem Druckabfall in der Druckleitung 2. Beispielsweise sind aus Kunststoff gefertigten Druckleitung 2 einer Relaxation unterworfen, d.h. dass Druckleitungen 2 aus Kunststoff bei einer, vor allem bei einer erstmaligen, Beaufschlagung mit einem Druck einer überwiegend plastischen Verformung unterworfen sind. Mit fortschreitender Verformung der Druckleitung 2 kommt es daher zu einem Druckabfall des Fluids im inneren Kanal der Druckleitung 2. Der zweite Anzeigebereich 8 ist daher günstigerweise so breit gewählt, dass der Einfluss der Relaxation der Druckleitung 2 bei einer dichten Druckleitung 2 nicht aus dem Anzeigebereich 8 herausführt, d.h., dass der Mindestdruck nicht unterschritten wird.

In Fig. 3 ist ein Zustand des Druckanzeigers 1 dargestellt, bei welchem ein Druck in der Druckleitung vorherrscht, welcher zwischen dem definierten Mindestdruck und dem definierten maximal zulässigen Prüfdruck liegt. Sinkt der Druck im Verlauf der Druckprüfung unter den definierten Mindestdruck, d.h. die Anzeige zeigt nur mehr den ersten Anzeigebereich 7 des Anzeigeelements 3 an, so kann der Betrachter auf einen unzulässigen Druckabfall und damit auf eine Leckage von Fluid aus der Druckleitung 2 schließen, vgl. Fig. 5.

Bei der ersten Beaufschlagung des Druckanzeigers 1 mit einem Druck wird das Benutzungs-Losbrechelement 11 vom Stempel 18 vom Gehäuse 13 abgeschert. Tritt, beispielsweise durch eine Fehlbedienung der Druckpumpe oder durch die Einwirkung eines Baugeräts auf die Druckleitung 2, eine unzulässige Überschreitung des definierten maximal zulässigen Überdrucks auf, so wird das Überdruck-Losbrechelement 12 vom Stempel 19 vom Gehäuse 13 abgeschert. Dies ist in Fig. 6 dargestellt, wobei das abgetrennte Überdruck-Losbrechelement 12 nicht gesondert dargestellt ist.

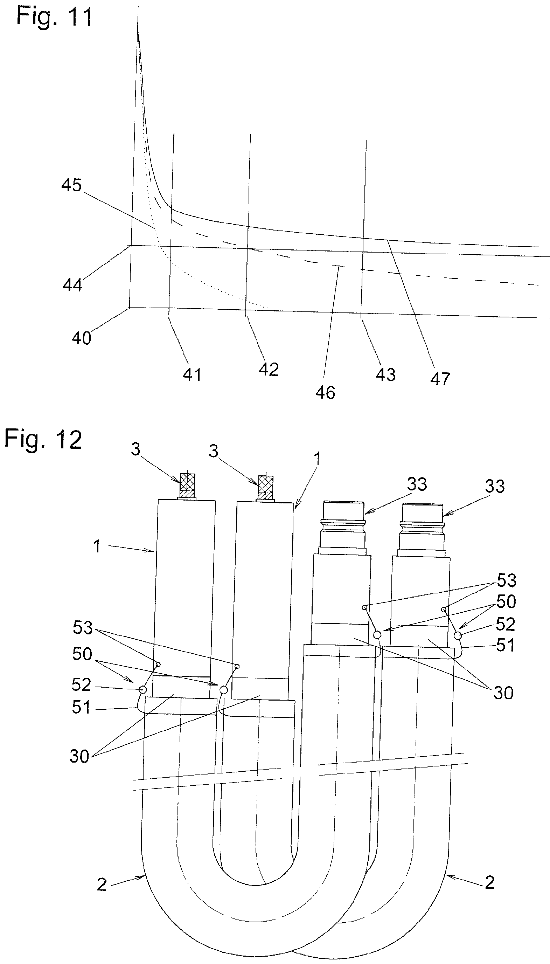

In Fig. 11 sind unterschiedliche Druck-Zeit-Verläufe gezeigt, die bei einer Druckprüfung auftreten könnten. In dem in Fig. 11 dargestellten Druck-Zeitdiagramm ist auf der Abszisse die Zeit und auf der Ordinate der in der Druckleitung 2 herrschende Druck eingetragen. Zu einem Startzeitpunkt 40 wird ein Prüfdruck, beispielsweise der maximal zulässige Prüfdruck, eingestellt. Dieser Prüfdruck kann beispielsweise 16 bar betragen. Im Weiteren sind im Diagramm mehrere Zeitpunkte eingezeichnet. Der erste Zeitpunkt 41 bezieht sich auf einen Zeitpunkt der 24 Stunden nach dem Startzeitpunkt 40 liegt. Der zweite Zeitpunkt 42 bezieht sich auf einen Zeitpunkt der 72 Stunden nach dem Startzeitpunkt 40 liegt. Der dritte Zeitpunkt 43 bezieht sich auf einen Zeitpunkt, der 144 Stunden nach dem Startzeitpunkt 40 liegt. Im Weiteren ist in das Druck-Zeitdiagramm der für die Druckleitung 2 definierte Mindestdruck 44 eingezeichnet. Dieser liegt im Ausführungsbeispiel bei 4 bar. Bei einer Beaufschlagung der Druckleitung 2 mit dem Prüfdruck und einem anschließenden Abfall des Drucks in der Druckleitung 2 unter den definierten Mindestdruck 44 liegt eine Leckage vor.

Ein erster Druckverlauf 45, der in Fig. 11 punktiert eingezeichnet ist, zeigt ein Szenario, bei dem eine relativ starke Leckage in der Druckleitung 2 auftritt. Bereits vor Eintreten des ersten Zeitpunkts 41 sinkt der Druck unter den definierten Mindestdruck 44 ab.

Der in Fig.11 gestrichelt dargestellte zweite Druckverlauf 46 zeigt eine Situation, bei der der Druck nach 72 Stunden ungefähr dem definierten Mindestdruck 44 entspricht. Nach 144 Stunden, d.h. zum Zeitpunkt 43, ist der Druck in der Druckleitung 2 unter den definierten Mindestdruck 44 gesunken. Auch diese Druckleitung 2 ist somit einer Leckage, wenn auch einer weniger starken Leckage als beim Druckverlauf 45, unterworfen. Die Druckleitung 2 ist bei Szenarien mit den Druckverläufen 45, 46 vor der Inbetriebnahme der geothermischen Anlage zu sanieren.

Der dritte Druckverlauf 47 zeigt die gewünschte Normalsituation. Der Druck in der Druckleitung 2 sinkt nach dem Startzeitpunkt 40, ähnlich wie bei den Druckverläufen 45 und 46 stark ab. Diese starke Absenkung des Drucks in der Druckleitung 2 geschieht aufgrund der Relaxation der im Ausführungsbeispiel aus Kunststoff hergestellten Druckleitung 2. Allerdings schneidet der dritte Druckverlauf 47 die eingezeichnete Schwelle des definierten Mindestdrucks 44 nicht. Es wurde in der Praxis festgestellt, dass sich der Druckverlauf bei einer druckdichten Druckleitung 2 asymptotisch an einen Druckwert annähert, der über dem eingezeichneten definierten Mindestdruck 44 ist. Ein Installateur, der die geothermische Anlage zu einem Zeitpunkt in Betrieb nehmen möchte, der nach dem dritten Zeitpunkt 43 liegt, d.h. im Ausführungsbeispiel bei 144 Stunden, sieht durch einen raschen Blick auf den Druckanzeiger 1, unmittelbar dass eine druckdichte Druckleitung 2 vorliegt. Beim Vorliegen einer druckdichten Druckleitung 2 wird der ersten Anzeigebereich 7 und zumindest ein Abschnitt des zweiten Anzeigebereichs 8 angezeigt. Wie bereits erläutert, ist der zweite Anzeigebereich 8 günstigerweise so breit gewählt, dass der Einfluss der Relaxation der Druckleitung 2 nicht aus dem Anzeigebereich 8 herausführt.

Im Sinne der Erfindung ist es möglich, dass der erste Zeitpunkt mehr als 1,5 Stunden nach dem Startzeitpunkt 40 ist. D.h., dass der Druckanzeiger 1 mehr als 1,5 Stunden mit der unter Druck stehenden Druckleitung 2 verbunden ist. Vorzugweise ist vorgesehen, dass der Druckanzeiger 1 zumindest 12 Stunden, besonders bevorzugt zumindest 24 Stunden, mit der unter Druck stehenden Druckleitung 2 verbunden ist. Besonders günstig ist es, wenn der Druckanzeiger 1 ab der Erstbenutzung des Druckanzeigers 1 bis zum Beginn der Inbetriebnahme der geothermischen Anlage mit der Druckleitung verbunden ist.

Mit dem erfindungsgemäßen Druckanzeiger 1 ist es möglich, eine kostengünstige und ständige Dichtheitsprüfung der Druckleitung 2 bis zur Inbetriebnahme der geothermischen Anlage zu realisieren. Dadurch können Schäden die nach dem Einbringen der Druckleitung 2 aufgetreten sind, z.B. durch schwere Baumaschinen oder unsachgemäßes Verdichten des Erdreichs, sofort am Druckanzeiger 1 abgelesen werden. Fehlt das Überdruck-Losbrechelement 12, so ist eine weitergehende Inbetriebnahme ohne eingehende Prüfung der Druckleitung 2 nicht ratsam.

In Fig. 12 ist eine Ausführungsvariante der Anordnungen gemäß Fig. 10 gezeigt, wobei in dieser Darstellung aus Gründen der Übersichtlichkeit auf Schnittansichten der Druckanzeiger 1 und der Befüllstutzen 33, sowie der Adapter 30, verzichtet wurde. Der strukturelle Aufbau der Druckanzeiger 1 und der Befüllstutzen 33, sowie der Adapter 30, entspricht jenem der in Fig. 10 dargestellten Anordnungen. Abgesehen von den im Folgenden angeführten Unterschieden wird deshalb auf die vorangegangenen Erläuterungen verwiesen.

In der in Fig. 12 dargestellten Ausführungsvariante ist vorgesehen, dass die jeweilige Anordnung eine Plombierung 50 zum Nachweis eines unerlaubten Entfernens des Druckanzeigers 1 von der Druckleitung 2 aufweist. Im dargestellten Beispiel weist die, vereinfacht dargestellte, Plombierung 50 einen Plombierdraht 51 und eine plastisch verformbare Plombe 52 auf.

Die beiden Enden des Plombierdrahts 51 sind im Ausführungsbeispiel jeweils durch Durchgangsbohrungen der Plombe 52 hindurchgeführt, wobei dies in Fig. 12 nicht gesondert dargestellt ist. Der Plombierdraht 51 ist in einem verplombten Zustand, in welchem die Plombe 52 plastisch verformt ist, formschlüssig in der Plombe 52 verankert. Die plastische Verformung der Plombe 52 könnte beispielsweise mittels einer an sich bekannten Plombierzange erfolgen.

Der Druckanzeiger 1 weist eine Durchgangsbohrung 53 auf, durch welche der Plombierdraht 51 der Plombierung 50 im verplombten Zustand hindurchgeführt ist. Im Weiteren ist der Plombierdraht 51 im Ausführungsbeispiel in Umfangsrichtung um die jeweilige Druckleitung 2 herumgeführt und mittels eines, nur mittels Zerstörung lösbaren, Klebers auf der Druckleitung 2 befestigt. Der Kleber ist in Fig. 12 nicht gesondert dargestellt. Alternativ könnte der Plombierdraht 51 in einer an der Druckleitung 2 angeordneten Nut oder einer Kerbe um die Druckleitung 2 herumgeführt sein oder mittels eines Siegelaufklebers an der Druckleitung 2 befestigt sein.

Die Plombierung 50 dient dazu, eine unzulässige Manipulation an der Anordnung, beispielsweise durch eine Entfernung des Druckanzeigers 1 von der Druckleitung 2, nachzuweisen. Im verplombten Zustand der Plombierung 50 ist diese nicht mehr zerstörungsfrei vom Druckanzeiger 1 und/oder von der Druckleitung 2 der Anordnung entfernbar. D.h., eine Beschädigung des Plombierdrahts 51 und/oder der Plombe 52 und/oder ein von der Druckleitung 2 gelöster Plombierdraht 51 weist bzw. weisen auf eine Manipulation an der Anordnung hin. Auch ein vollständiges Fehlen der Plombierung 50 ist ein Hinweis auf eine unzulässige Manipulation an der Anordnung.

Der Plombierdraht 51 ist in Fig. 12 vereinfacht dargestellt und könnte, wie dies bekannt ist, einen Hauptdraht und einem spiralförmig um den Hauptdraht gewickelten Zusatzdraht aufweisen. Der spiralförmige Zusatzdraht verhindert im verplombten Zustand ein Herausziehen des Plombierdrahts 51 aus der plastisch verformten Plombe 52.

Zusätzlich ist in der in Fig. 12 dargestellten Ausführungsvariante vorgesehen, dass die jeweilige Anordnung eine optionale weitere Plombierung 50 zum Nachweis einer unerlaubten Entfernung des Befüllstutzens 33 von der Druckleitung 2 aufweist. Die weitere Plombierung 50 zum Nachweis der unerlaubten Entfernung des Befüllstutzens 33 ist in dieser Ausführungsvariante identisch zur bereits erläuterten Plombierung 50 zum Nachweis einer unerlaubten Entfernung des Druckanzeigers 1 ausgeführt, weshalb auf die obigen Ausführungen verwiesen wird. Dementsprechend weist der jeweilige Befüllstutzen 33 eine Durchgangsbohrung 53 auf, durch welche der Plombierdraht 51 im verplombten Zustand der weiteren Plombierung 50 hindurchgeführt ist, usw.

Die Plombe 52 der Plombierung 50 bzw. der weiteren Plombierung könnte beispielsweise aus Metall, z.B. Blei oder Aluminium, oder aus Kunststoff bestehen, wie dies an sich bekannt ist.

Auch andere Varianten von Plombierungen 50 sind denkbar und möglich. Beispielsweise könnte die Plombierung ein Klebeetikett, z.B. eine Siegelmarke oder ein Aufklebesiegel oder ein Klebesiegel, sein, welches in verplombten Zustand, beispielsweise bei der Montage des Druckanzeigers 1 bzw. des Befüllstutzens 33, auf den Druckanzeiger 1 bzw. den Befüllstutzen 33 und den optionalen Adapter 30 und die Druckleitung 2 aufgeklebt ist. Ein beschädigtes Klebeetikett weist dann auf eine unzulässige Manipulation an der Anordnung hin.

### Legende

### zu den Hinweisziffern:

| | | | |
|---|---|---|---|
| 1 | Druckanzeiger | 26 | Ausnehmung |
| 2 | Druckleitung | | |
| 3 | Anzeigeelement | 30 | Adapter |
| 4 | Feder | 31 | Dichtung |
| 5 | Verbindungselement | 32 | Rasterhebung |
| 6 | Skala | 33 | Befüllstutzen |
| 7 | erster Anzeigebereich | 34 | Rückschlagventil |
| 8 | zweiter Anzeigebereich | 35 | Gewinde |
| 9 | dritter Anzeigebereich | 36 | Zuführkanal |
| 10 | vierter Anzeigebereich | 37 | Steckanschluss |
| 11 | Benutzungs-Losbrechelement | 38 | Gegenverbindungselement |
| 12 | Überdruck-Losbrechelement | 39 | innerer Kanal |
| 13 | Gehäuse | 40 | Start-Zeitpunkt |
| 14 | Dichtung | 41 | erster Zeitpunkt |
| 15 | Kolbenstange | 42 | zweiter Zeitpunkt |
| 16 | Kolben | 43 | dritter Zeitpunkt |
| 17 | Zylinder | 44 | definierter Mindestdruck |
| 18 | erster Stempel | 45 | erster Druckverlauf |
| 19 | zweiter Stempel | 46 | zweiter Druckverlauf |
| 20 | Ausnehmung | 47 | dritter Druckverlauf |
| 21 | Ausnehmung | | |
| 22 | Steg | 50 | Plombierung |
| 23 | Steg | 51 | Plombierdraht |
| 24 | Stift | 52 | Plombe |
| 25 | Anschlag | 53 | Durchgangsbohrung |

## Patentansprüche

1. Druckanzeiger (1) für eine Druckleitung (2) einer geothermischen Anlage, insbesondere für ein Erdwärmerohr, mit einem Anzeigeelement (3) zur optischen Anzeige des Drucks in der Druckleitung (2) und zumindest einem Verbindungselement (5) zur druckdichten Verbindung mit der Druckleitung (2), wobei das Anzeigeelement (3) verschiebbar gelagert ist, und das Anzeigeelement (3) mit Druck beaufschlagbar und gegen den Federdruck einer Feder (4) des Druckanzeigers (1) verschiebbar ist, **dadurch gekennzeichnet, dass** der Druckanzeiger (1) ein Benutzungs-Losbrechelement (11) zum Nachweis der Erstbenutzung des Druckanzeigers (1) und/oder dass der Druckanzeiger (1) ein Überdruck-Losbrechelement (12) zum Nachweis des Überschreitens eines maximal zulässigen Überdrucks aufweist.

2. Druckanzeiger (1) nach Anspruch 1, **dadurch gekennzeichnet, dass** der Druckanzeiger (1) eine Skala (6) mit zumindest zwei voneinander abgegrenzten Anzeigebereichen (7, 8, 9, 10) aufweist.

3. Druckanzeiger (1) nach Anspruch 2, **dadurch gekennzeichnet, dass** die Skala (6) einen ersten Anzeigebereich (7) zur Anzeige eines Druckbereichs der unterhalb eines Mindestdrucks liegt, und einen zweiten Anzeigebereich (8) zur Anzeige eines Druckbereichs welcher zwischen dem Mindestdruck und einem maximal zulässigen Prüfdruck liegt, und einen dritten Anzeigebereich (9) zur Anzeige eines Druckbereichs der über dem maximal zulässigen Prüfdruck liegt, aufweist.

4. Druckanzeiger (1) nach Anspruch 2 oder 3, **dadurch gekennzeichnet, dass** die Skala (6) am Anzeigeelement (3) angeordnet ist.

5. Druckanzeiger (1) nach einem der Ansprüche 1 bis 4, **dadurch gekennzeichnet, dass** das Anzeigeelement (3) einen Kolben (16) aufweist oder ein Kolben (16) ist, wobei der Kolben (16) mit dem Druck beaufschlagbar ist und/oder in einem Gehäuse 13, vorzugsweise Zylinder (17), des Druckanzeigers (1) verschiebbar ist.

6. Druckanzeiger (1) nach einem der Ansprüche 1 bis 5, **dadurch gekennzeichnet, dass** das Benutzungs-Losbrechelement (11) und/oder das Überdruck-Losbrechelement (12) vom Anzeigeelement (3) abbrechbar ist oder sind.

7. Druckanzeiger (1) nach Anspruch 6, **dadurch gekennzeichnet, dass** das Anzeigeelement (3) zumindest einen Stempel (18, 19) zum Einwirken auf das Benutzungs-Losbrechelement (11) und/oder Überdruck-Losbrechelement (12) aufweist.

8. Druckanzeiger (1) nach einem der Ansprüche 1 bis 7, **dadurch gekennzeichnet, dass** das Benutzungs-Losbrechelement (11) und/oder das Überdruck-Losbrechelement (12) mit einem Gehäuse (13) des Druckanzeigers (1), vorzugsweise materialeinstückig, verbunden ist oder sind.

9. Anordnung mit einer Druckleitung (2) einer geothermischen Anlage, insbesondere einem Erdwärmerohr, und einem Druckanzeiger (1) zur Erfassung des Drucks in der Druckleitung (2), **dadurch gekennzeichnet, dass** der Druckanzeiger (1) nach einem der Ansprüche 1 bis 8 ausgebildet ist und der Druckanzeiger (1) über das Verbindungselement (5) druckdicht mit der Druckleitung (2) verbunden ist.

10. Verfahren zur Druckprüfung einer Druckleitung (2) einer geothermischen Anlage, insbesondere eines Erdwärmerohrs, mit einem Druckanzeiger (1) nach einem der Ansprüche 1 bis 8, wobei der Druckanzeiger (1) mit der Druckleitung (2) druckdicht verbunden wird oder ist, und die Druckleitung (2) mit einem Druck, welcher einem definierten Prüfdruck entspricht, beaufschlagt wird, wobei der Druckanzeiger (1) mehr als 1,5 Stunden, vorzugsweise zumindest 12 Stunden, besonders bevorzugt zumindest 24 Stunden, mit der unter Druck stehenden Druckleitung (2) verbunden ist.

## Claims

1. Pressure indicator (1) for a pressure line (2) of a geothermal installation, in particular for a geothermal heat pipe, with a display element (3) for optical display of the pressure in the pressure line (2) and at least one connection element (5) for pressure-tight connection with the pressure line (2), wherein the display element (3) is mounted displaceably, and the display element (3) can be subjected to pressure and is displaceable against the spring pressure of a spring (4) of the pressure indicator (1), **characterised in that** the pressure indicator (1) has a use breakaway element (11) for proving first use of the pressure indicator (1) and/or that the pressure indicator (1) has an overpressure breakaway element (12) for proving exceeding of a maximum permitted overpressure.

2. Pressure indicator (1) according to claim 1, **characterised in that** the pressure indicator (1) has a scale (6) with at least two separate display ranges (7, 8, 9, 10).

3. Pressure indicator (1) according to claim 2, **characterised in that** the scale (6) has a first display range (7) for display of a pressure range which lies below a minimum pressure, and a second display range (8) for display of a pressure range which lies between the minimum pressure and a maximum permitted test pressure, and a third display range (9) for display of a pressure range which lies above the maximum permitted test pressure.

4. Pressure indicator (1) according to claim 2 or 3, **characterised in that** the scale (6) is arranged on the display element (3).

5. Pressure indicator (1) according to one of the claims 1 to 4, **characterised in that** the display element (3) has a piston (16) or is a piston (16), wherein the piston (16) can be subjected to pressure and/or can be displaced within a housing 13, preferably cylinder (17), of the pressure indicator (1).

6. Pressure indicator (1) according to one of the claims 1 to 5, **characterised in that** the use breakaway element (11) and/or the overpressure breakaway element (12) can be broken off by the display element (3).

7. Pressure indicator (1) according to claim 6, **characterised in that** the display element (3) has at least one stamp (18, 19) for acting on the use breakaway element (11) and/or overpressure breakaway element (12).

8. Pressure indicator (1) according to one of the claims 1 to 7, **characterised in that** the use breakaway element (11) and/or the overpressure breakaway element (12) is or are connected with a housing (13) of the pressure indicator (1), preferably as a single piece of material.

9. Arrangement with a pressure line (2) of a geothermal installation, in particular a geothermal heat pipe, and a pressure indicator (1) for detecting the pressure in the pressure line (2), **characterised in that** the pressure indicator (1) is configurd according to one of the claims 1 to 8 and the pressure indicator (1) is connected with the pressure line (2) in a pressure-tight manner via the connection element (5).

10. Method for testing the pressure of a pressure line (2) of a geothermal installation, in particular of a geothermal heat pipe, with a pressure indicator (1) according to one of the claims 1 to 8, wherein the pressure indicator (1) is connected with the pressure line (2) in a pressure-tight manner, and the pressure line (2) is subjected to a pressure which corresponds to a defined test pressure, wherein the pressure indicator (1) is connected with the pressurised pressure line (2) for more than 1.5 hours, preferably at least 12 hours, particularly preferably at least 24 hours.

## Revendications

1. Indicateur de pression (1) pour une conduite sous pression (2) d'une installation géothermique, en particulier pour une conduite géothermique, avec un élément indicateur (3) pour indiquer visuellement de la pression dans la conduite sous pression (2), et au moins un élément de raccordement (5) pour le raccorder de façon étanche à la pression à la conduite sous pression (2), l'élément indicateur (3) étant logé mobile, et l'élément indicateur (3) pouvant être soumis à une pression et déplacé contre la pression de ressort d'un ressort (4) de l'indicateur de pression (1), **caractérisé en ce que** l'indicateur de pression (1) présente un élément de rupture de première utilisation (11) pour indiquer la première utilisation de l'indicateur de pression (1), et/ou **en ce que** l'indicateur de pression (1) présente un élément de rupture de surpression (12) pour indiquer qu'une surpression maximale admissible a été dépassée.

2. Indicateur de pression (1) selon la revendication 1, **caractérisé en ce que** l'indicateur de pression (1) présente une échelle (6) avec au moins deux zones d'affichage (7, 8, 9, 10) délimitées l'une par rapport à l'autre.

3. Indicateur de pression (1) selon la revendication 2, **caractérisé en ce que** l'échelle (6) présente une première zone d'affichage (7) pour l'affichage d'une plage de pressions qui se situe en dessous d'une pression minimale, et une deuxième zone d'affichage (8) pour l'affichage d'une plage de pressions qui se situe entre la pression minimale et une pression de contrôle maximale admissible, et une troisième zone d'affichage (9) pour l'affichage d'une plage de pressions qui se situe au-dessus de la pression de contrôle maximale admissible.

4. Indicateur de pression (1) selon la revendication 2 ou 3, **caractérisé en ce que** l'échelle (6) est disposée sur l'élément indicateur (3).

5. Indicateur de pression (1) selon l'une des revendications 1 à 4, **caractérisé en ce que** l'élément indicateur (3) comprend un piston (16) ou est un piston (16), lequel piston (16) pouvant être soumis à la pression et/ou étant déplaçable dans un boîtier (13), de préférence un cylindre (17), de l'indicateur de pression (1).

6. Indicateur de pression (1) selon l'une des revendications 1 à 5, **caractérisé en ce que** l'élément de rupture de première utilisation (11) et/ou l'élément de rupture de surpression (12) peuvent être rompus par l'élément indicateur (3).

7. Indicateur de pression (1) selon la revendication 6, **caractérisé en ce que** l'élément indicateur (3) comprend au moins un poinçon (18, 19) pour agir sur l'élément de rupture de première utilisation (11) et/ou l'élément de rupture de surpression (12).

8. Indicateur de pression (1) selon l'une des revendications 1 à 7, **caractérisé en ce que** l'élément de rupture de première utilisation (11) et/ou l'élément de rupture de surpression (12) est ou sont relié(s) à un boîtier (13) de l'indicateur de pression (1), de préférence en une seule pièce de matériau.

9. Agencement avec une conduite sous pression (2) d'une installation géothermique, en particulier un tube géothermique, et un indicateur de pression (1) pour mesurer la pression dans la conduite sous pression (2), **caractérisé en ce que** l'indicateur de pression (1) est conçu selon l'une des revendications 1 à 8, et l'indicateur de pression (1) est relié à la conduite sous pression (2) de façon étanche à la pression par l'intermédiaire de l'élément de liaison (5).

10. Procédé pour contrôler la pression d'une conduite sous pression (2) d'une installation géothermique, en particulier d'un tube géothermique, avec un indicateur de pression (1) selon l'une des revendications 1 à 8, dans lequel l'indicateur de pression (1) est déjà relié à la conduite sous pression (2) de façon étanche à la pression ou on le relie à la conduite sous pression (2) de façon étanche à la pression, et la conduite sous pression (2) est soumise à une pression correspondant à une pression de contrôle définie, l'indicateur de pression (1) étant relié à la conduite sous pression (2) se trouvant sous pression pendant plus de 1,5 heure, de préférence pendant au moins 12 heures, de façon privilégiée pendant au moins 24 heures.
